Europäisches Patentamt

European Patent Office

Office européen des brevets

(11) Veröffentlichungsnummer: **0 447 863 A1**

# (12) EUROPÄISCHE PATENTANMELDUNG

(21) Anmeldenummer: 91103168.0

(51) Int. Cl.⁵: **B62B 5/04**

(22) Anmeldetag: 02.03.91

(30) Priorität: 20.03.90 DE 4008855

(43) Veröffentlichungstag der Anmeldung:
25.09.91 Patentblatt 91/39

(84) Benannte Vertragsstaaten:
DE FR GB IT NL

(71) Anmelder: Paul vom Stein & Co.
Frohntaler Strasse 30
W-5632 Wermelskirchen(DE)

(72) Erfinder: Schröder, Dieter
Dorn 41
W-5632 Wermelskirchen 1(DE)
Erfinder: Weichbrodt, Tobias, Dipl.-Ing.
Döllersweg 65
W-5632 Wermelskirchen 1(DE)

(74) Vertreter: Sonnet, Bernd, Dipl.-Ing. et al
Patentanwälte Dipl.-Ing. Harald Ostriga
Dipl.-Ing. Bernd Sonnet Stresemannstrasse
6-8 Postfach 20 13 27
W-5600 Wuppertal 2(DE)

(54) **Fahrwerk für Transportbehälter, Apparate od.dgl.**

(57) Dargestellt und beschrieben ist ein Fahrwerk für Transportbehälter, Apparate od. dgl. mit einer Bodenplatte (10) und - daran montiert - wenigstens zwei Laufrollen (12) und einer Feststellvorrichtung für eine Blockiereinrichtung für zumindest die Drehbewegung der Räder (24,25) der Laufrollen (12), wobei die Feststellvorrichtung je wenigstens einen Festellhebel (23) und einen Lösehebel (22) aufweist, die über eine Gestängeanordnung miteinander gekuppelt und mit laufrollenseitigen Stößeln (32) als Bestandteil der Blockiereinrichtung wirkverbunden sind, wobei an einer an der Bodenplatte (10) schwenkbar gelagerten Schwinge (16) einerseits mit den Hebeln (22,23) verbundene Lenker (18,19) und andererseits Schubstangen (29) angreifen, mit denen mindestens mittelbar Keilflächen (31) zur Verstellung der Stößel (32) verbunden sind. Um ein solchen Fahrwerk verfügbar zu machen, welches in seinem konstruktiven Aufbau wesentlich vereinfacht ist und bei dem die Blockiereinrichtung für jede zu blockierende Laufrolle (12) stets sicher wirkt, ist vorgesehen, daß die Schubstangen (29) direkt von der Schwinge (16) zu den Laufrollen (12) geführt sowie mit den Keilflächen (31) versehen sind, die sich auf den Stößeln (32) druckschlüssig abstützen.

EP 0 447 863 A1

# FIG.1

Die Erfindung bezieht sich auf ein Fahrwerk für Transportbehälter, Apparate od. dgl. mit einer Bodenplatte und - daran montiert - wenigstens zwei Laufrollen und einer Ferstellvorrichtung für eine Blockiereinrichtung für zumindest die Drehbewegung der Räder der Laufrollen, wobei die Feststellvorrichtung je wenigstens einen Festellhebel und einen Lösehebel aufweist, die über eine Gestängeanordnung miteinander gekuppelt und mit laufrollenseitigen Stößeln als Bestandteil der Blockiereinrichtung wirkverbunden sind, wobei an einer an der Bodenplatte schwenkbar gelagerten Schwinge einerseits mit den Hebeln verbundene Lenker und andererseits Schubstangen angreifen, mit denen mindestens mittelbar Keilflächen zur Verstellung der Stößel verbunden sind.

Insbesondere ist hierbei an ein Fahrwerk für Servierwagen gedacht, die in Verkehrsflugzeugen als fahrbare Behälter zur Bevorratung von Speisen und Getränken dienen, die an die Passagiere ausgegeben werden, sowie danach zum Einsammeln der leeren Gefäße und Verpackungen. Man nennt solche Transportbehälter "Trolleys". Durch offenkundige Vorbenutzung ist ein Fahrwerk für Trolleys bekanntgeworden, welches in der Konstruktion seiner Feststellvorrichtung und Blockiereinrichtung sehr kompliziert ist. Entsprechend den Merkmalen des Oberbegriffs des Anspruches 1 geht die vorliegende Erfindung von einem solchen Fahrwerk aus. Dabei sind die an der Schwinge ihrerseits gelenkig gelagerten Schubstangen mit drehbar in Konsolen gelagerten Verstellböcken gekuppelt. Diese Verstellböcke, die wie ihre Lager aus aufwendigen Leichtmetalldruckgußteilen bestehen, wirken auf in Lagerwangen der Lager bezüglich des Bodens höhenverstellbaren weiteren Stangen hubverstellend ein. Die Enden dieser Stangen, die im übrigen zur Abstützung auf den Keilflächen noch mit zusätzlichen Hülsen versehen sind, beaufschlagen die in den Laufrollen angebrachten, die Bremsung der Räder bewirkenden Stößel. Abgesehen von dem hier getriebenen konstruktiven Aufwand ist die Anordnung, auch aufgrund der Vielzahl der miteinander in Bewegungszuordnung befindlichen Einzelteile, relativ labil. So sind insbesondere die zusätzlichen Betätigungsstangen für die Stößel gegen Verkippung nicht gesichert. Die Folge davon kann sein, daß eine der beiden jeweils durch eine solche Stange blockierbetätigten Laufrollen nicht hinreichend gebremst wird. Eine Blockierung der Schwenkbewegung des Rollentragteils ist - jedenfalls mit vertretbarem Aufwand - nicht möglich.

Aufgabe der Erfindung ist es folglich, ein Fahrwerk der im Oberbegriff des Anspruches 1 näher umrissenen Art verfügbar zu machen, welches in seinem konstruktiven Aufbau wesentlich vereinfacht ist und bei dem die Blockiereinrichtung für jede zu blockierende Laufrolle stets sicher wirkt. Auch soll die Auslegung des Fahrwerks bei Bedarf eine einfache Anordnung einer Schwenkblockierung des Lenkrollen ermöglichen.

Die Erfindung löst diese Aufgabe in erster Linie und im wesentlichen dadurch, daß die Schubstangen direkt von der Schwinge zu den Laufrollen geführt sowie mit den Keilflächen versehen sind, die sich auf den Stößeln druckschlüssig abstützen.

Im Unterschied zum Stand der Technik werden entsprechend der Erfindung die Schubstangen direkt, also auf kurzen Wegen unmittelbar von der Schwinge zu der jeweiligen Laufrolle geführt. Damit sind nicht nur die Lager für die bislang die Keilflächen aufweisenden Drehkörper, sondern auch die Drehkörper selbst und im übrigen die damit druckschlüssig zusammenwirkenden Verstellstangen sowie schließlich die in Fortfall gelangenden, für diese bislang erforderlichen Befestigungsmittel entbehrlich. Die bisher an den Drehkörpern befindlichen Keilflächen sind nunmehr an den Schubstangen angeordnet und dienen zur unmittelbaren direkten Beaufschlagung der Stößel als den Bestandteilen der Blockiereinrichtung für zumindest ein Rad wenigstens einer Lenkrolle des Fahrwerks. Im allgemeinen wird aber je wenigstens ein Rad jeder von insgesamt vier am Fahrwerk befindlichen Laufrollen blockiert. Insoweit weist in der Regel jede Schubstange eine stößelverstellende Keilfläche auf. Aufgrund der nur noch wenigen miteinander zusammenhängenden Teilen ergibt sich weniger Gesamtspiel und folglich eine präzisere und verschleißarme Verstellmimik. Selbstverständlich resultiert daraus auch eine ganz wesentlich vereinfachte und rascher durchzuführende Montage des gesamten Fahrwerks.

Die von der Schwinge jeweils zu einer Laufrolle weisenden Enden jeder Schubstange ruhen vorzugsweise in einem Schwenklager, welches vorzugsweise an einer plattenartigen Konsole für das Montageblech einer Laufrolle ausgebildet ist Dabei kann entsprechend einem weiteren Vorschlag der Erfindung das von der Schwinge jeweils zu einer Laufrolle weisende Ende jeder Schubstange vom Montageblech der zugehörigen Laufrolle übergriffen sein, wordurch die Schubstange mit Bezug zur Bodenplatte unverlierbar gehalten ist.

Im Unterschied zum Stand der Technik ist es aufgrund der erfindungsgemäßen Konzeption ohne weiteres möglich, daß wenigstens eine der Schubstangen einen die Schwenkbewegung der zugehörigen Laufrolle blockierenden Hemmschuh trägt, der bei niedergedrücktem Stößel gegen das Rollentragteil preßt. Da die Schubstange nicht quer zum Boden, sondern entsprechend der Erfindung parallel zum Boden verstellt wird, kann ein an der Schubstange befestigter und deshalb ebenfalls bodenparalleler verstellbarer Hemmschuh ohne weiteres angeordnet werden, so daß gleichzeitig sowohl die Radbremse als auch die Schwenkblockierung bei der Laufrolle wirksam werden können. Dies erfordert keinen nennenswerten konstruktiven Mehraufwand.

Vorzugsweise besteht jede Schubstange aus Kunststoff, und die Keilfläche ist an ihr werkstoffeinheitlich angeformt.

Statt der bisherigen Anordnung der Lenker und Schubstangen an der Schwinge mittels splintgesicherter und Unterlegscheiben behafteter Bolzen ist nunmehr vorgesehen, daß die Schubstangen und/oder die Lenker mittels drehriegelartigem Hintergriff nach Art einer Schlüssel / Schlüsselloch-Verbindung unverlierbar sowie wiederlösbar an der Schwinge eingehängt sind. Jegliche Art von zusätzlichen Befestigungsmitteln ist demnach entbehrlich.

Mit weiterem Vorteil ist vorgesehen, daß die Lenker stegartige Mitnehmer aufweisen, an denen sich die Hebel mit klauenartigen Betätigungsvorsprüngen jeweils druck- bzw. zugschlüssig abstützen. Im Unterschied dazu waren bisher die Lenker mit dem jeweiligen Hebel ebenfalls durch eine splintgesicherte Bolzenverbindung gekuppelt. Besonders einfach ist es, wenn die Mitnehmer an den Lenkern sowie die Betätigungsvorsprünge an den Hebeln jeweils werkstoffeinheitlich sowie einstückig ausgebildet sind.

Nach einem weiteren Vorschlag der Erfindung ist vorgesehen, daß die gemeinsame Lagerachse für den Fetstellhebel und den Lösehebel mit mindestens zwei in axialem Abstand voneinander angeordneten Mantelvorsprüngen versehen ist, von denen der axialäußere undrehbar in einer schlüssellochartigen Ausklinkung einer der Achslagerwangen einer Hebel-Lagerkonsole einsteckt und der axialinnere in einer Stufenbohrung eines der beiden Hebel axial abgestützt ist, wobei die Achslager der beiden Hebel hülsenförmig ausgebildet sind und sich in ihrer Gesamtlänge auf ein Maß ergänzen, das unter Berücksichtigung des erforderlichen Schwenk-Bewegungsspiels auf der Lagerachse dem lichten Innenmaß zwischen den Achslagerwangen der Hebel-Lagerkonsole entspricht. Für die Hebel und ihre Lagerung sind außer den Hebeln selbst und der ohnehin benötigten Hebel-Lagerkonsole nur diese besonders gestaltete Lagerachse erforderlich. Es entfallen Distanzbuchsen und -hülsen ebenso wie Unterlegscheiben und Splinte zur Sicherung der Lagerachse an der Hebel-Lagerkonsole, wie sie bisher benötigt werden. Die Montage der Hebel erfolgt werkzeug- und fremdbestigungsmittelfrei durch bloßes bajonettartiges Einstecken der Lagerachse in die Lagerwangen der Hebel-Lagerkonsole und Durchstecken durch ein ähnliches Schlüsselloch in einem Lagerbereich eines der beiden Hebel.

Im übrigen versteht sich die Erfindung am besten anhand der nachfolgenden Erläuterung eines in den Zeichnungen dargestellten Ausführungsbeispiels. In den Zeichnungen zeigen:

Fig. 1 ein Fahrwerk als Unteransicht unter die Bodenplatte eines Transportwagens mit gelöster Blockiereinrichtung,

Fig. 2 eine entsprechende Darstellung, jedoch in arretierter Stellung der Blockiereinrichtung,

Fig. 3 einen Schnitt entsprechend der Schnittangabe III-III in Fig. 2,

Fig. 4 einen entsprechenden Schnitt gemäß Schnittlinie IV-IV in Fig. 1,

Fig. 5 einen Schnitt entsprechend der Schnittlinie V-V in Fig. 2,

Fig. 6 einen Schnitt entsprechend der Schnittangabe VI-VI in Fig. 5,

Fig. 7 einen Schnitt entsprechend der Schnittlinie VII-VII in Fig. 1 und

Fig. 8 eine Ansicht in Richtung des Ansichtspfeiles VIII in Fig. 1.

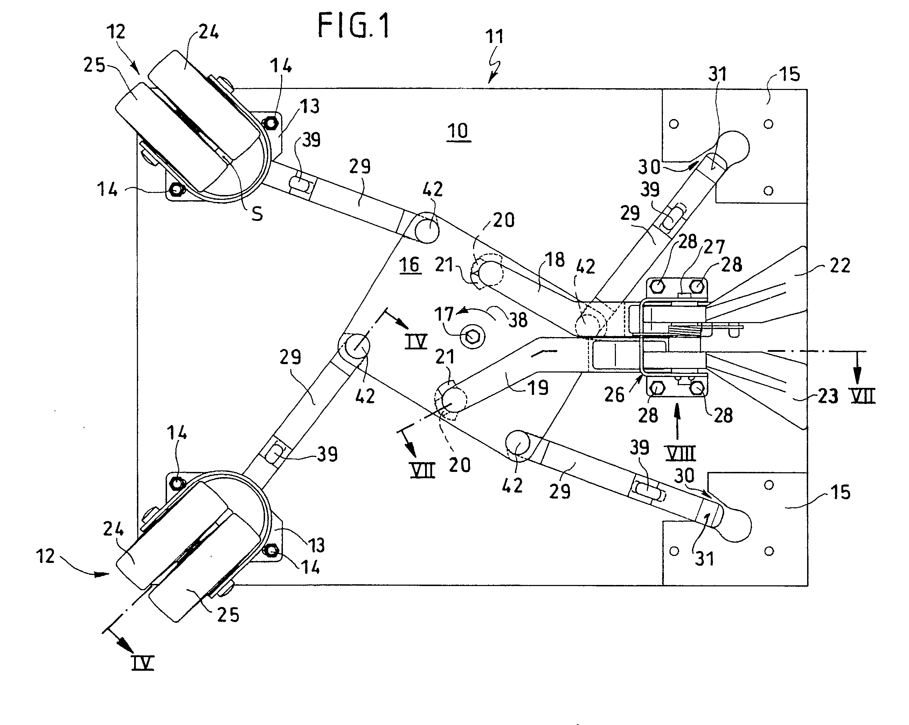

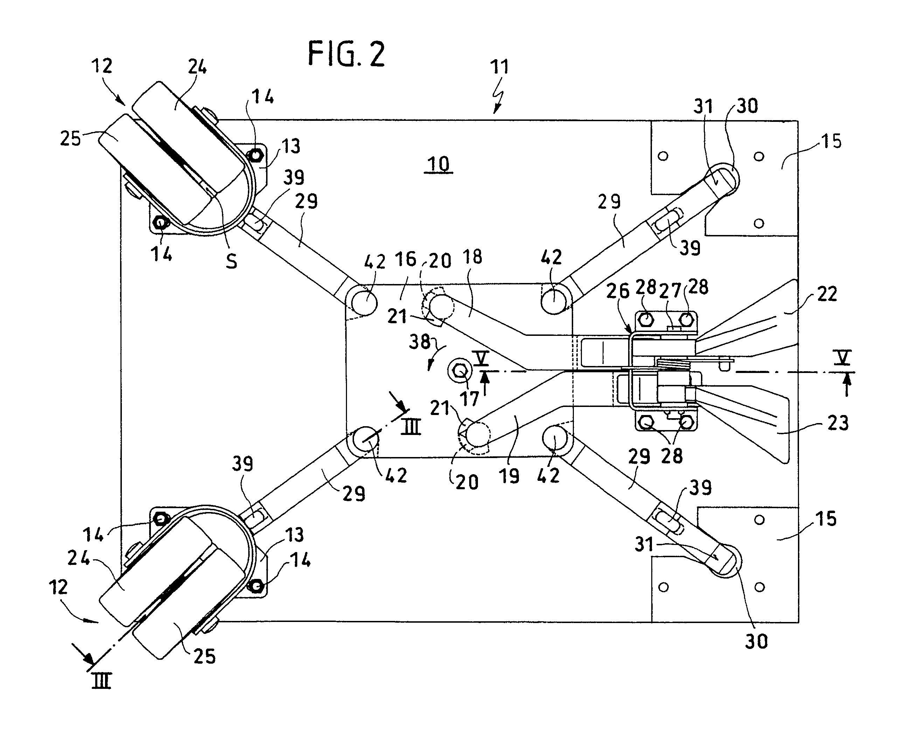

Mit 10 ist eine Bodenplatte eines mit Hilfe eines insgesamt mit 11 bezeichneten Fahrwerks rollbaren Transportbehälters bezeichnet. Das Fahrwerk 11 umfaßt vier, als Schwenkrollen ausgebildete Zwillings-Laufrollen 12, von denen in den Fig. 1 und 2 jeweils ein Paar dargestellt ist. Sie sind jeweils mittels eines Montagebleches 13 und Schrauben 14 auf eine plattenartige Konsole 15 aufgeschraubt, die jeweils ihrerseits an der Bodenplatte 10 befestigt ist.

Etwa in der Mitte der Bodenplatte 10 ist eine plattenartige Schwinge 16 mittels einer Achse 17 in einer bodenparallelen Ebene schwenkbar angeordnet. Jeweils zu verschiedenen Seiten der Achse 17 sind an ihr zwei Lenker-Hebel - nachfolgend kurz als Lenker 18 und 19 bezeichnet - angekuppelt. Jeder Lenker 18, 19 weist einen schlüsselbartartigen Fortsatz 20 auf, der in eine schlüssellochartige Ausnehmung 21 der Schwinge 16 hineinpaßt. Nach dem Einstecken wird jeder Lenker 18, 19 in die in den Fig. 1 und 2 dargestellte bestimmungsgemäße Position geschwenkt, in der er mittels drehriegelartigem Hintergriff an der Schwinge unverlierbar eingehängt ist.

Der Lenker 18 ist in einer bodenparallelen Ebene verschiebebeweglich mit einem Hebel 22, und analog der Lenker 19 mit einem daneben angeordneten Hebel 23 gekuppelt. Bei dem Hebel 23 handelt es sich um den Feststellhebel, während der Hebel 22 der Lösehebel für die nachfolgend im einzelnen beschriebene Blockiervorrichtung für die Räder 24, 25 der Laufrollen 12 ist. Die beiden Hebel 22 und 23 sind in einer in Aufsicht U-förmigen Hebel-Lagerkonsole 26 auf einer Lagerachse 27 schwenkbeweglich gelagert, die mittels Schrauben 28 an der Bodenplatte 10 angeschraubt ist. Im übrigen sind dies neben den Schrauben 14 und der Lagerschraube 17 für die Schwinge 16 die einzigen des gesamten Fahrwerks.

Mit der Schwinge 16 sind in radial weiter außenliegender Anordnung als derjenigen der Lenker 18 und 19 eine der Zahl der Laufrollen 12 entsprechende Zahl von Schubstangen 29 angelenkt. Die von der Schwinge 16 wegweisenden freien Enden jeder Schubstange 29 sind schwenkbeweglich in Schwenklagern 30 der Konsolen 15 gelagert. Die Schwenklager 30 sind in den Konsolen 15 als zur Achse 17 hin offene Taschen ausgebildet. Jede Schubstange 29 erstreckt sich von der Schwinge 16 nach außen im wesentlichen in Richtung auf die Schwenkachse S jeder der vier Lenkrollen 12.

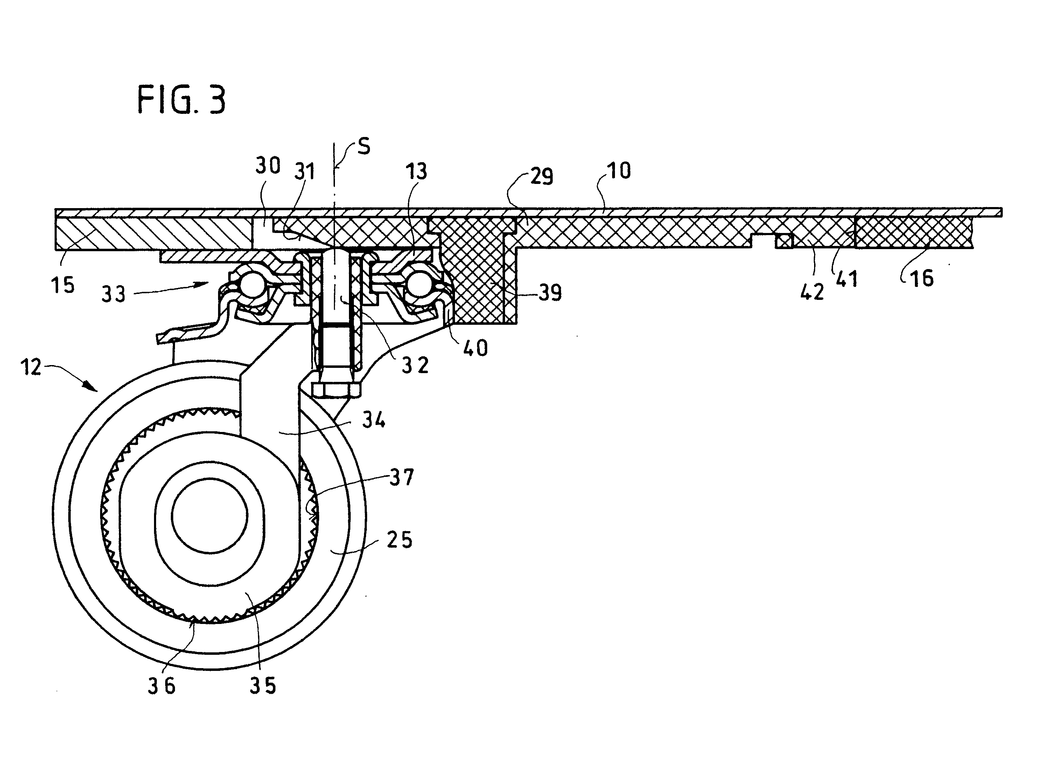

Ebenfalls im Bereich ihres freien Endes weist jede Schubstange 29 eine Keilfläche 31 auf, die von der Bodenplatte 10 nach unten zur jeweiligen Laufrolle 12 weist und je einen Stößel 32 druckbeaufschlagt, der zentral im Lenkrollenlager 33 vertikal verstellbar aufgenommen ist. Jeder Stößel 32 steht in bewegungsgekuppelter Verbindung über einen Arm 34 mit einem Radbremskörper 35, dessen Außenverzahnung 36 zum Eingriff in eine Gegenverzahnung 37 an einem Rad 25 bestimmt ist. Im Bremseingriffsfall (Fig. 3) ist somit dieses Rad 25 drehblockiert. Die nähere Ausgestaltung dieser Rad- Brems- oder -Blockiereinrichtung ist im übrigen Gegenstand des DE-GM 88 10 731 der Anmelderin, worauf bezüglich konstruktiver Einzelheiten verwiesen wird.

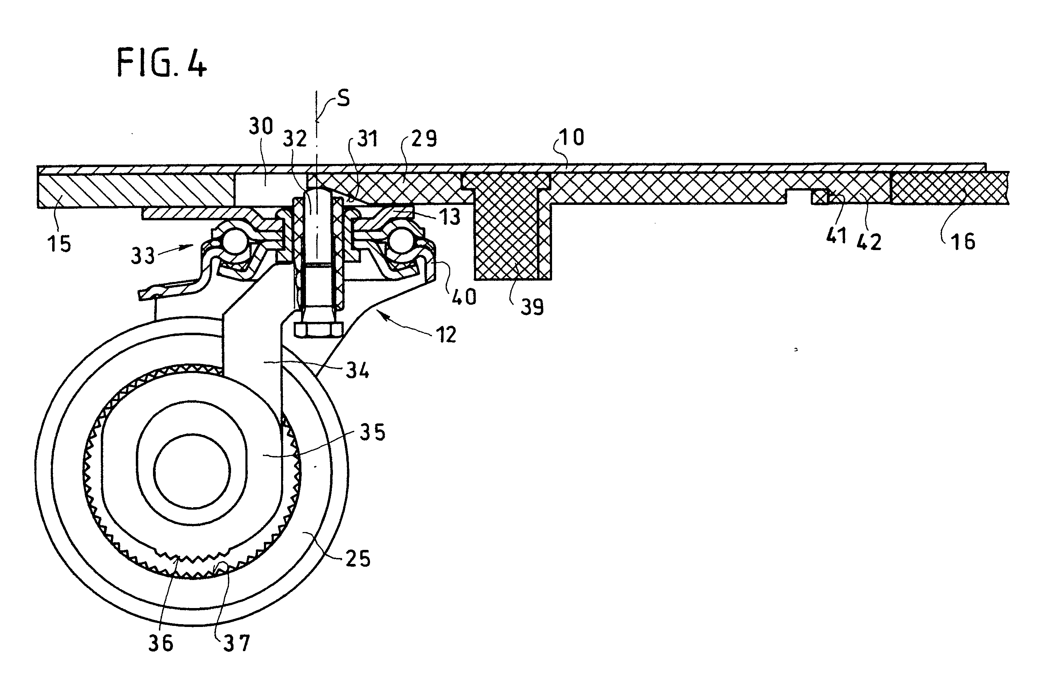

In der Brems-Lösestellung entsprechend Fig. 1 und Fig. 4 befinden sich die Schubstangen 29 in von den Lenkrollen 12 zurückgezogener Stellung. Zwar kontaktiert jeder Stößel 32 die zugehörige Schubstange 29 druckschlüssig im Bereich ihrer Keilfläche 31 oder eines Aufläufers davon (Fig. 4), doch befindet sich der Stößel 32 in einer oberen Position, die der nicht gebremsten Radstellung entspricht. Wird jetzt durch Betätigung des Feststellhebels 23 - ausgehend von Fig. 1 bzw. 4 - die Schwinge 16 entgegen dem Uhrzeigersinn in Richtung des Pfeiles 38 gedreht, werden alle vier Schubstangen 29 vorgeschoben. Ihre jeweilige Keilfläche 31 schiebt sich auf den Stößel 32 und drückt diesen nach unten in die Bremsstellung entsrechend Fig. 2 und 3.

An jeder Schubstange 29 ist außerdem ein Hemmschuh 39 angebracht, der aus einem entropieelastischen Werkstoff, insbesondere Gummi oder gummielastischem Kunststoff besteht, und der sich in der Bremsstellung gegen das Rückenlager 40 der zugehörigen Laufrolle 12 preßt, die dadurch daran gehindert ist, um ihre mit der Längsachse des Stößels 32 zusammenfallende Schwenkachse S zu schwenken. In diesem Falle ist die Bremse also einerseits als Drehblockierung für mindestens jeweils ein Rad 25 und gleichzeitig als Schwenkblockierung für jede Lenkrolle 12 ausgelegt.

Wie insbesondere aus den Fig. 3 und 4 ersichtlich ist, wird jede aus einem Kunststofformteil bestehende Schubstange 29 unmittelbar auf der Oberfläche der Bodenplatte 10 geführt gehalten und unverlierbar dadurch am Platze gehalten, daß die Schubstange von der Montageplatte 13 der zugehörigen Lenkrolle 12 übergriffen wird. Im übrigen liegt die Schubstange 29 auch stets auf der oberen Stirnfläche des Stößels 32 auf. Die Kupplung jedes den Lenkrollen 12 abgewandten Endes jeder Schubstange 29 mit der Schwinge 16 geschieht einfach dadurch, daß die Schwinge 16 mit einer Kuppelausnehmung 41 einen entsprechenden kreisrunden Kuppelzapfen 42 am Ende der Schubstange 29 übergreift.

Die beiden Lenker 18 und 19 durchgreifen auf ihrem Weg von der Schwinge 16 zum jeweils zugehörigen Hebel 22 bzw. 23 ein Fenster 43 des zentralen Steges 44 der Hebel-Lagerkonsole 26. An seinem in den Raum der Lagerkonsole 26 eintretenden Ende weist jeder Lenker einen steg- oder rippenartigen Mitnehmer 45 auf, mit dem der Hebel 22 mittels eines Fortsatzes 46 einseitig-zugschlüssig und der Hebel 23 mittels zweier, eine Klaue bildender Fortsätze 47, 48 zug- und druckschlüssig zusammenwirken. In beiden Fällen ist die Anordnung so getroffen, daß jeder Hebel 22, 23 an dem ihm zugeordneten Lenker 18 oder 19 zieht, wenn er niedergetreten wird. Die Trittrichtung für den Hebel 22 ist mit 49 und die für den Hebel 23 mit 50 bezeichnet. Sowohl die beiden Lenker 18 und 19 als auch die beiden Hebel 22 und 23 sind wiederum jeweils einstückige Kunststoffspritzgießteile.

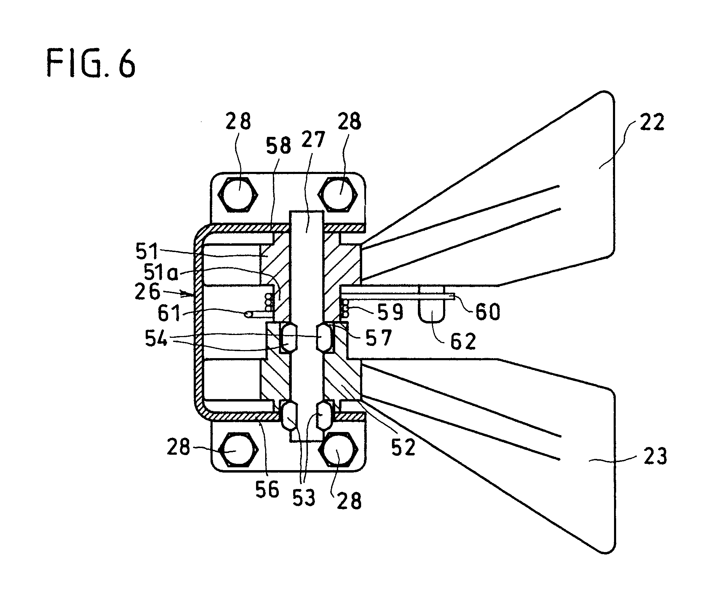

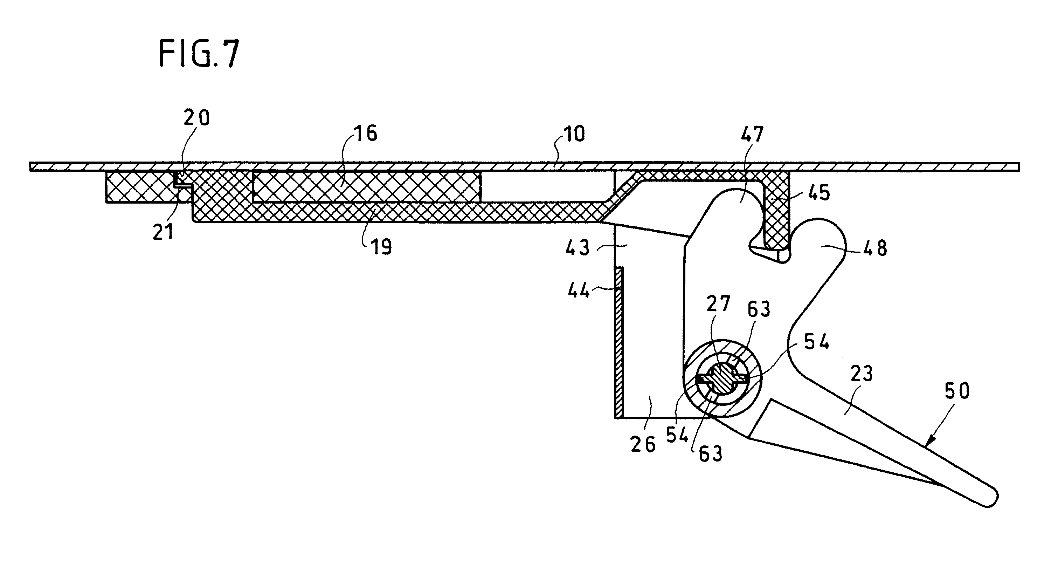

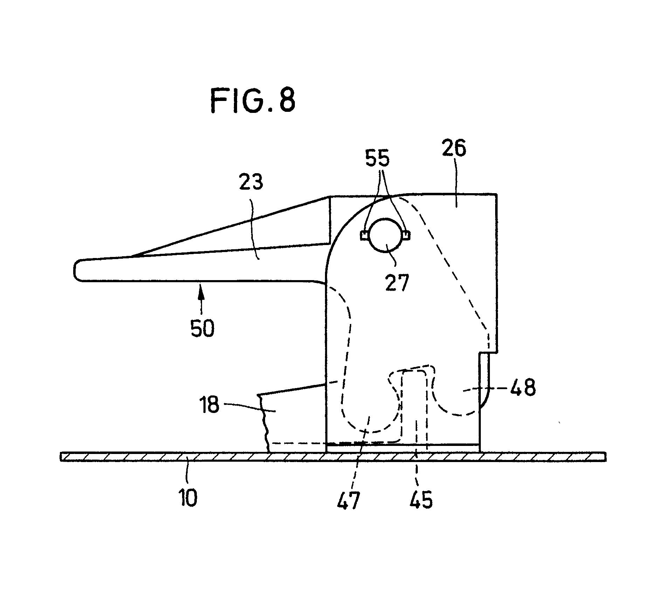

Wie Fig. 6 ausweist, sitzt jeder der beiden Nebel 22 und 23 mittels hülsenartiger Achslager 51 bzw. 52 auf der Lagerachse 27. Diese besitzt in axialem Abstand und in jeweils paariger Anordnung Mantelvorsprünge 53 und 54. Diese sind in Form von Rippen durch im wesentlichen tangentiales Stauchen des Werkstoffes der Achse 27 ausgebildet. Die achsaußenseitigen Mantelvorsprünge 53 greifen nach Art von Schlüsselbärten in angepaßte schlüssellochförmige Spalte 55 (Fig. 8) einer der beiden Achslagerwangen 56 der Hebel-Lagerkonsole 26 ein. Das andere Vorsprungspaar 54 sitzt in einer kreisrunden Aufnahme 57, die innerhalb der Lagerhülse 52 des Hebels 23 ausgebildet ist. Folglich wird die Lagerachse 27 durch das formschlüssige Eingreifen der Mantelvorsprünge 53 in die Achslagerwange 56 umdrehbar gehalten, während der Hebel 23 relativ zur festgelegten Achse 27 schwenken kann. Damit Lagerachse und Hebel 23 zusammengesteckt werden können, weist die Lagerbohrung des Nebels 23 in zur Betriebslage umfangsversetzte Anordnung ebenfalls passende "Schlüssellöcher" 63 (Fig. 7) auf.

Die beiden hülsenförmigen Lagerabschnitte 51 und 52 der beiden Hebel 22 und 23 grenzen direkt aneinander an und besitzen eine Gesamtlänge, die im wesentlichen der lichten inneren Weite zwischen den beiden Schenkeln 56 und 58 der Konsole 26 entspricht.

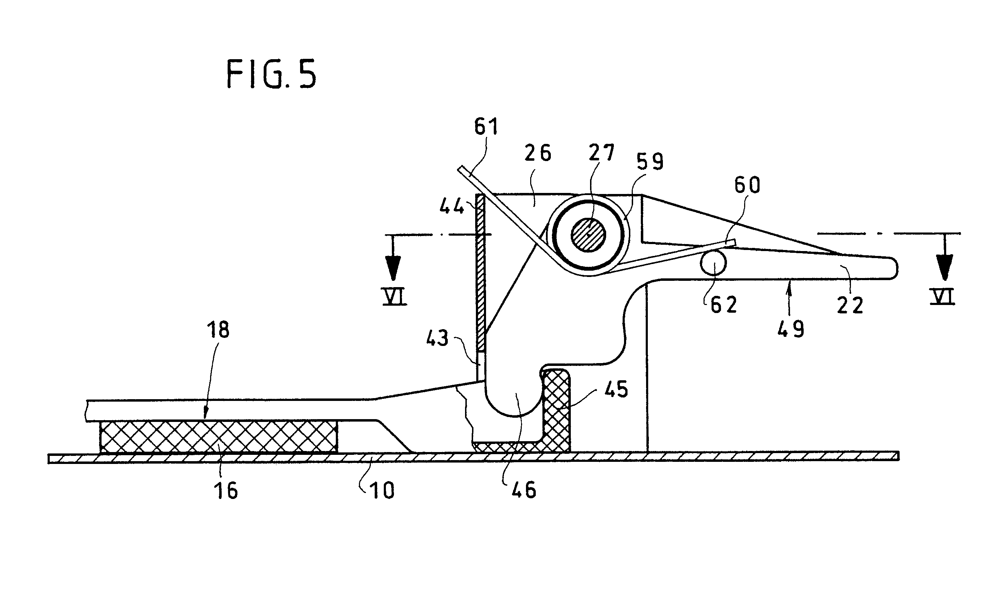

Auf einem Hülsenabschnitt 51a des Hebels 22 ist eine Schenkel-Rückstellfeder 59 gelagert, deren einer Schenkel 60 unter einem Fortsatz 62 des Nebels 22 druckschlüssig abgestützt ist und deren anderer Schenkel 61 unter Federdruck an der Nebel-Lagerkonsole 26 anliegt (Fig. 5).

Zur Bedienungsfunktion sei noch folgendes erläutert: wird der Feststellhebel 23 niedergetreten (Pfeil 50) verschwenkt - wie ausgeführt - die Schwinge 16 in Umfangsrichtung 38 und schiebt die Schubstangen 29 in Blockierstellung. Dadurch wird gleichzeitig der Lenker 18 von seinem zugehörigen Nebel 22 in Richtung zur Plattenmitte fortgezogen. Dies hat zur Folge, daß der Lösehebel 22 in die in Fig. 5 gezeichnete Endstellung befördert wird. Soll nun die Feststelleinrichtung wieder gelöst werden, wird dieser Hebel 22 niedergetreten (Pfeil 49), womit vermittels des Fortsatzes 26 der Lenker 18 zum Rand der Bodenplatte 10 gezogen wird. Nach Loslassen springt der Lösehebel nach Fig. 5 zurück in seine günstige Ausgangslage für spätere Betätigung. Der andere Lenker 19 wird zur Plattenmitte hin gezogen. Dies hat zur Folge, daß der Feststellhebel 50 aus seiner der Blockierstellung entsprechenden Lage nach Fig. 7 zurückbefördert wird in die in Fig. 8 dargestellte Lage, in der er durch Tritt in Richtung des Pfeiles 50 erneut betätigbar ist.

Wichtig ist auch, wie aus Fig. 2 deutlich zu ersehen ist, daß jede Schubstange 29 mit der Schwinge 16 eine Kniehebelanordnung ausbildet, wobei der eine Kniehebel von der Schubstange 29 selbst gebildet wird, der andere Kniehebel von der Verbindung zwischen den Gelenkzapfen 17 und 42 und das Knie mit dem Gelenkzapfen 42 zusammenfällt. Die Blockierstellung nach Fig. 2 zeichnet sich bezüglich der insgesamt vier Kniehebelanordnungen durch deren geringfügige Übertotpunktstellung aus, so daß die Brems- bzw. Blockierstellung automatisch gesichert ist. Ein anderer Vorteil der Kniebelanordnung besteht in der geringen aufzubringenden Betätigungskraft des Feststellhebels 23. Andererseits ist die Kniehebelblockierung durch Niedertreten des Lösehebels 22 unter geringem Kraftaufwand ebenfalls ohne weiteres möglich. Die als elastische Kissen ausgebildeten Nemmschuhe 39 wirken in der Übertotpunktstellung nach Fig. 2 zudem noch toleranzausgleichend und halten die Kniehebelanordnung unter kraftschlüssiger Spannung.

**Patentansprüche**

1. Fahrwerk für Transportbehälter, Apparate od.

dgl. mit einer Bodenplatte und - daran montiert - wenigstens zwei Laufrollen und einer Ferstellvorrichtung für eine Blockiereinrichtung für zumindest die Drehbewegung der Räder der Laufrollen, wobei die Feststellvorrichtung je wenigstens einen Festellhebel und einen Lösehebel aufweist, die über eine Gestängeanordnung miteinander gekuppelt und mit laufrollenseitigen Stößeln als Bestandteil der Blockiereinrichtung wirkverbunden sind, wobei an einer an der Bodenplatte schwenkbar gelagerten Schwinge einerseits mit den Nebeln verbundene Lenker und andererseits Schubstangen angreifen, mit denen mindestens mittelbar Keilflächen zur Verstellung der Stößel verbunden sind, dadurch gekennzeichnet, daß die Schubstangen (29) direkt von der Schwinge (16) zu den Laufrollen (12) geführt sowie mit den Keilflächen (31) versehen sind, die sich auf den Stößeln (32) druckschlüssig abstützen.

2. Fahrwerk nach Anspruch 1, dadurch gekennzeichnet, daß die von der Schwinge (16) jeweils zu eine Laufrolle (12) weisenden Enden jeder Schubstange (29) in einem Schwenklager (30) ruhen.

3. Fahrwerk nach Anspruch 2, dadurch gekennzeichnet, daß jedes Schwenklager (30) an einer plattenartigen Konsole (15) für das Montageblech (13) einer Laufrolle (12) ausgebildet sind.

4. Fahrwerk nach Anspruch 1 oder 2, dadurch gekennzeichnet, daß das von der Schwinge (16) jeweils zu einer Laufrolle (12) weisende Ende jeder Schubstange (29) vom Montageblech (13) der zugehörigen Laufrolle (12) übergriffen und die Schubstange (29) dadurch mit Bezug zur Bodenplatte (10) unverlierbar gehalten ist.

5. Fahrwerk nach Anspruch 1 oder einem der folgenden, dadurch gekennzeichnet, daß wenigstens eine der Schubstangen (29) einen die Schwenkbewegung der zugehörigen Laufrolle( 12) blockierenden Hemmschuh (39) trägt, der bei niedergedrücktem Stößel (32) gegen das Rollentragteil (40) preßt.

6. Fahrwerk nach Anspruch 1 oder einem der folgenden, dadurch gekennzeichnet, daß jede Schubstange (29) aus Kunststoff besteht und die Keilfläche (31) an ihr werkstoffeinheitlich angeformt ist.

7. Fahrwerk nach Anspruch 1, dadurch gekennzeichnet, daß die Schubstangen (29) und/oder die Lenker (18, 19) mittels drehriegelartigem Hintergriff nach Art einer Schlüssel / Schlüsselloch-Verbindung unverlierbar sowie wiederlösbar an der Schwinge (16) eingehängt sind.

8. Fahrwerk nach Anspruch 1, dadurch gekennzeichnet, daß die Lenker ( 18, 19) stegartige Mitnehmer (45) aufweisen, an denen sich die Nebel (22, 23) mit klauenartigen Betätigungsvorsprüngen (46, 47) jeweils druck- bzw. zugschlüssig abstützen.

9. Fahrwerk nach Anspruch 8, dadurch gekennzeichnet, daß die Mitnehmer (45) an den Lenkern (18, 19) sowie die Betätigungsvorsprünge (46, 47) an den Hebeln (22, 23) jeweils werkstoffeinheitlich sowie einstückig ausgebildet sind.

10. Fahrwerk nach Anspruch 1, dadurch gekennzeichnet, daß die gemeinsame Lagerachse (27) für den Feststellhebel (23) und den Lösehebel (22) mit mindestens zwei in axialem Abstand voneinander angeordneten Mantelvorsprüngen (53, 54) versehen ist, von denen der axialäußere undrehbar in einer schlüssellochartigen Ausklinkung (55) einer der Achslagerwangen (56, 58) einer Nebel-Lagerkonsole (26) einsteckt und der axialinnere in einer Stufenbohrung (57) eines der beiden Nebel (23) axial abgestützt ist.

11. Fahrwerk nach Anspruch 10, dadurch gekennzeichnet, daß die Achslager (51, 52) der beiden Nebel (22, 23) hülsenförmig ausgebildet sind und sich in ihrer Gesamtlänge auf ein Maß ergänzen, das unter Berücksichtigung des erforderlichen Schwenk-Bewegungsspiels auf der Lagerachse (27) dem lichten Innenmaß zwischen den Achslagerwangen (56, 58) der Hebel-Lagerkonsole (26) entspricht.

12. Fahrwerk nach Anspruch 11, dadurch gekennzeichnet, daß das Achslager (51) des Lösehebels (22) einen Bundabsatz zur Lagerung einer Rückstell-Schenkelfeder (59) aufweist.

FIG.1

FIG. 2

EP 0 447 863 A1

FIG. 3

EP 0 447 863 A1

FIG.4

FIG.5

EP 0 447 863 A1

# FIG. 6

EP 0 447 863 A1

FIG.7

EP 0 447 863 A1

# FIG.8

EP 0 447 863 A1

Europäisches
Patentamt

**EUROPÄISCHER
RECHERCHENBERICHT**

Nummer der Anmeldung

**EP 91 10 3168**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | GB-A-1 338 643   (TOMADO N.V.)<br>* Seite 2, Zeile 9 - Seite 2, Zeile 75; Figuren *<br>– – – | 1,2,3,4 | B 62 B 5/04 |
| A | GB-A-2 130 316   (H.L.HASELTINE (AVELEY))<br>* Seite 1, Zeile 94 - Seite 2, Zeile 99; Figuren *<br>– – – | 1-4,7,12 | |
| A | DE-U-8 809 849   (LERMER GMBH)<br>* Seite 5, Zeile 21 - Seite 8, Zeile 6; Figuren *<br>– – – | 1-4,8-10 | |
| A | DE-U-8 324 703   (ROLF RODEHAU GMBH & CO KG METALLWARENFABRIK)<br>* Figuren *<br>– – – | 1-3,7,10, 11 | |
| A | FR-A-2 200 123   (A. VAN DER WALLE)<br>* Seite 3, Zeile 25 - Seite 4, Zeile 30; Figuren *<br>– – – – – | 1,2,5,6 | |

| | RECHERCHIERTE SACHGEBIETE (Int. Cl.5) |
|---|---|
| | B 62 B |

Der vorliegende Recherchenbericht wurde für alle Patentansprüche erstellt

| Recherchenort | Abschlußdatum der Recherche | Prüfer |
|---|---|---|
| Den Haag | 25 Juni 91 | FRANKS B.G. |